# FASCICULE DE BREVET EUROPEEN

(11) **EP 1 936 134 B1**
(45) Date de publication et mention de la délivrance du brevet: **08.07.2015**
(21) Numéro de dépôt: 07150150.6
(22) Date de dépôt: 19.12.2007
(51) Int. Cl.: F01L 21/04, F03C 1/007, F03C 1/12

(54) **Moteur hydraulique**
Hydraulikmotor
Hydraulic motor

(30) Priorité: 19.12.2006 FR 0655616
(43) Date de publication de la demande: 25.06.2008
(73) Titulaire: Alfa Laval Moatti, 78340 Les Clayes-sous-Bois (FR)
(72) Inventeur: Chrupalla, Jean-Claude, 95490 Vauréal (FR); Hugues, Pascal, 44700 Orvault (FR)
(74) Mandataire: Alfa Laval Attorneys

(56) Documents cités:
- EP-A1- 0 022 021
- DE-C- 169 074
- US-A- 456 128
- US-A- 3 869 928

## Description

L'invention concerne un moteur hydraulique du type comprenant un carter traversé par un arbre rotatif couplé par des moyens de conversion de mouvement à un piston à déplacement rectiligne alternatif, mobile à l'intérieur du carter et monté coulissant le long de l'arbre. L'invention concerne notamment la structure d'un inverseur capable de commander alternativement et séquentiellement le remplissage d'une chambre et la vidange de l'autre pour assurer un mouvement alternatif du piston et par conséquent la rotation de l'arbre.

Dans le domaine des filtres à nettoyage automatique par circulation à contre-courant du fluide filtré au travers d'un secteur isolé du filtre, il est nécessaire de faire tourner le système d'isolement pour réaliser un nettoyage en continu de la surface filtrante.

Pour faire tourner le système d'isolement, il est avantageux de disposer d'un moteur hydraulique utilisant pour son fonctionnement une petite partie du fluide filtré par le filtre qu'il équipe, sans apport d'énergie extérieure.

Un tel moteur doit comporter une partie de puissance permettant de transformer l'énergie hydraulique du fluide en énergie mécanique, plus particulièrement en un mouvement rotatif pratiquement continu et toujours dans le même sens, afin d'entraîner le système d'isolement du filtre sur lequel il est installé. Le moteur doit aussi comporter une partie de commande regroupant l'ensemble des fonctions et des circuits permettant l'alimentation et la distribution en fluide du moteur, pour assurer son propre fonctionnement.

Le brevet européen 0 022 021 décrit un moteur hydraulique à piston alternatif et à rochet, dans lequel le déplacement alternatif du piston entraîne une rotation continue et dans le même sens d'un arbre de sortie. L'ensemble de la fonction de commande est assurée par des distributeurs extérieurs et par des relais d'inversion. Ce type de moteur est avantageux car la vitesse de rotation convient bien à l'application envisagée, le couple est important et il est susceptible de fonctionner à faible pression. En outre, la consommation de fluide est faible et le rendement est bon. En revanche, un tel système nécessite un grand nombre de composants, particulièrement pour la fonction de commande de l'inversion du fluide d'actionnement. Son montage et sa maintenance nécessitent un personnel qualifié. Son coût de revient est important.

L'invention propose un moteur hydraulique de ce genre, de conception améliorée et particulièrement remarquable par la simplicité des moyens assurant la fonction de commande.

Plus particulièrement, l'invention concerne un moteur hydraulique du type comprenant un carter traversé par un arbre rotatif couplé par des moyens de conversion de mouvement à un piston à déplacement rectiligne alternatif, mobile à l'intérieur dudit carter et monté coulissant le long dudit arbre, ledit piston définissant dans ledit carter des première et seconde chambres alternativement alimentées en fluide sous pression, caractérisé en ce qu'il comporte un inverseur installé à l'intérieur dudit carter et comportant trois éléments coaxiaux d'axe parallèle à celui dudit arbre rotatif et montés coulissants et/ou tournants de façon étanche les uns par rapport aux autres :
- un premier manchon solidaire du piston et s'étendant dans ladite première chambre,
- un deuxième manchon, fixe, solidaire d'une paroi d'extrémité du carter et s'étendant au travers de ladite seconde chambre et dudit premier manchon, jusqu'à ladite première chambre,
- un distributeur s'étendant entre les deux chambres et monté rotatif à l'intérieur dudit deuxième manchon,
et en ce que ledit inverseur comporte en outre :
- des éléments de conduits et trous aptes à commander et commuter la circulation du fluide d'actionnement, agencés entre le deuxième manchon et le distributeur pour commander alternativement et séquentiellement le remplissage d'une chambre et la vidange de l'autre suivant que ledit distributeur occupe telle ou telle position prédéterminée parmi plusieurs définies par la coopération desdits éléments coaxiaux, et
- des moyens de commande de rotation dudit distributeur en fonction du déplacement dudit premier manchon solidaire du piston.

Avantageusement, les moyens de commande comportent des rampes et butées longitudinales, agencées aux extrémités libres desdits premier et deuxième manchons. Un ergot latéral est monté mobile dans une lumière longitudinale du distributeur et coopère avec lesdites rampes et butées en étant élastiquement sollicité vers elles.

L'invention sera mieux comprise et d'autres avantages de celle-ci apparaîtront plus clairement à la lumière de la description qui va suivre d'un moteur hydraulique conforme à son principe, donnée uniquement à titre d'exemple et faite en référence aux dessins annexés, dans lesquels :
- la figure 1 est une vue en perspective avec arrachement partiel d'un moteur hydraulique conforme à l'invention ;
- la figure 2 est une vue de détail illustrant l'arbre rotatif ;
- la figure 3 est une vue de détail illustrant un premier manchon de l'inverseur ;
- la figure 4 est une vue de détail illustrant un deuxième manchon de l'inverseur ;
- les figures 5 et 6 sont des vues de détail illustrant le distributeur faisant partie de l'inverseur ;
- la figure 7 représente en perspective l'inverseur assemblé ; et
- les figures 8 à 11 sont des vues en perspective avec arrachement partiel de l'inverseur dans différents états, pour illustrer son fonctionnement.

Le moteur hydraulique 11 représenté est plus particulièrement adapté à être utilisé avec un dispositif de filtrage en continu d'un fluide hydraulique tel que de l'huile. De façon bien connue, le dispositif de filtrage comporte des moyens de décolmatage automatique nécessitant la rotation en continu d'un système d'isolement, pour mettre hors circuit et isoler un secteur du filtre. Ce secteur est nettoyé par circulation à contre-courant. Il est donc avantageux de disposer d'un moteur hydraulique utilisant, pour son déplacement rotatif, une petite partie du fluide filtré, sous pression. C'est ce que permet l'invention.

Le moteur hydraulique est du type comportant un carter 12 traversé par un arbre rotatif 13 d'axe Y, maintenu entre des paliers 14, 16 définis dans deux parois d'extrémités 18, 20 parallèles. Le carter 12 comporte aussi une paroi cylindrique 22 s'étendant entre les deux parois d'extrémités. Un piston 24 coulisse de façon étanche, grâce à des joints extérieur 25 et intérieur 26 le long de la face interne de la paroi cylindrique 22 du carter 12 et le long de la surface de l'arbre 13,

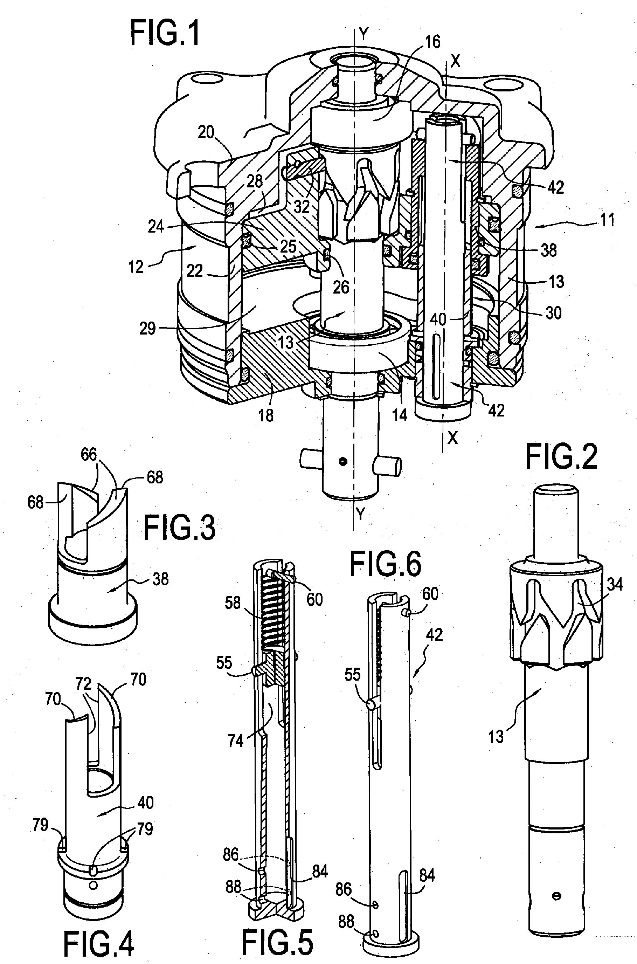

Le piston 24 sépare ainsi l'espace interne du carter 12 en une première chambre 28 (la chambre supérieure en considérant la figure 1) et en une seconde chambre 29 (la chambre inférieure) alternativement alimentées en fluide sous pression par un inverseur 30 qui sera décrit plus loin.

L'alimentation alternée des deux chambres 28, 29 rend le mouvement du piston rectiligne et alternatif avec inversion automatique du sens de déplacement quand le piston atteint l'une des deux positions de fin de course.

De plus, le piston 24 comporte deux ergots 32 opposés, faisant saillie radialement vers l'intérieur et engagés dans une gorge circonférentielle ondulée 34, creusée à la surface extérieure dudit arbre 13 dans une portion de plus grand diamètre de celui-ci.

Ainsi, le déplacement rectiligne alternatif du piston 24 se traduit par un entraînement rotatif pratiquement continu et dans le même sens de l'arbre rotatif 13. L'agencement de ce type de conversion de mouvement est indépendant de la structure de l'inverseur qui va être décrit plus loin. Ce type de moteur peut s'accommoder de tout système d'inversion de pression, par exemple à commande par électrovanne pilotée par des capteurs, ou tout autre système de même fonction.

L'inverseur 30 est remarquable par sa simplicité, utilisant un nombre minimum de pièces, faciles à assembler et à mettre en place. Sa maintenance est aisée puisqu'il est possible de démonter l'ensemble par le bas, la paroi 18 étant amovible.

Selon une caractéristique importante de l'invention, l'inverseur 30 est installé à l'intérieur du carter 12 et comporte trois éléments coaxiaux, d'axe X-X parallèle à celui dudit arbre rotatif 13 et montés coulissants et/ou tournants avec contact étanche les uns par rapport aux autres pour mettre en communication successivement et alternativement l'une ou l'autre des chambres 28, 29 avec un fluide d'actionnement sous pression. Ces éléments se définissent comme suit :
- Un premier manchon 38 est solidaire du piston 24 et s'étend dans ladite première chambre 28.
- Un deuxième manchon 40, fixe, est solidaire d'une paroi d'extrémité du carter (la paroi 18) et s'étend au travers de ladite seconde chambre 29 et dudit premier manchon jusqu'à ladite première chambre 28. Il débouche ainsi dans ladite première chambre à l'intérieur dudit premier manchon.
- Un distributeur 42, aussi en forme de manchon, selon l'exemple, s'étend entre les deux chambres. Il est monté rotatif à l'intérieur dudit deuxième manchon 40. Le premier manchon coulisse de façon étanche, c'est-à-dire à frottement doux à l'extérieur du deuxième manchon tandis que le distributeur 42 est monté de façon étanche dans le deuxième manchon, avec possibilité de rotation autour de l'axe XX commun aux trois éléments.

L'inverseur 30 comporte des éléments de conduits et trous aptes à commander et commuter la circulation du fluide d'actionnement. Ils sont agencés entre le deuxième manchon 40 et le distributeur 42 pour commander alternativement et séquentiellement le remplissage de l'une des chambres par du fluide sous pression et la vidange simultanée de l'autre chambre. La chambre mise sous pression est sélectionnée selon que ledit distributeur 42 occupe telle ou telle position prédéterminée (angulairement) parmi plusieurs, définies par la coopération des manchons 38, 40. Dans l'exemple, la rotation du distributeur 42 entre deux positions prédéterminées successives est de 90°.

En outre, l'inverseur 30 comporte des moyens de commande 50 de la rotation dudit distributeur 42 en fonction du déplacement dudit premier manchon 38 solidaire du piston.

Dans l'exemple décrit, lesdits moyens de commande 50 comportent des rampes et butées longitudinales agencées aux extrémités libres (dans ladite première chambre) desdits premier et deuxième manchons. De plus, un ergot latéral 55 est monté mobile dans une lumière longitudinale dudit distributeur 42. Il coopère avec ces rampes et butées longitudinales en étant élastiquement sollicité vers elles.

Il est à noter que le premier manchon 38 comporte deux larges échancrures qui définissent les butées 68 tandis que le second manchon 40 comporte aussi deux larges échancrures qui définissent les butées 72. L'épaisseur de paroi du premier manchon est plus importante, le long des butées 68, que celle du second manchon de sorte que, le long de ces butées, les deux manchons sont en contact avec la surface du distributeur 42. Les deux manchons sont imbriqués l'un dans l'autre sans possibilité de rotation de l'un par rapport à l'autre.

Selon l'exemple, un ressort 58 est monté à l'intérieur dudit distributeur 42 entre une butée 60 de celui-ci et ledit ergot latéral 55, pour repousser l'ergot vers les rampes et butées longitudinales.

Très préférentiellement, l'ergot 55 est double et s'étend diamétralement en saillie, au travers d'une double lumière 56 du distributeur, longitudinalement, de part et d'autre de celui-ci. Par ailleurs, lesdits premier et deuxième manchons comportent chacun deux rampes et deux butées longitudinales précitées.

Plus particulièrement, ledit premier manchon 38 comporte, à son extrémité libre, deux rampes 66 opposées et symétriques (par rapport à l'axe de rotation XX) ainsi que deux butées longitudinales 68 précitées.

De façon analogue, ledit second manchon 40 comporte à son extrémité libre deux rampes 70 opposées et symétriques (par rapport à l'axe) ainsi que deux butées longitudinales 72 précitées. Les rampes ont le même pas et le coulissement entre les deux manchons est tel qu'une rampe dudit premier manchon peut venir dans le prolongement d'une rampe dudit deuxième manchon, comme on le verra en détail plus loin.

Il est clair que le rôle du distributeur est de diriger l'écoulement du fluide d'actionnement, c'est pourquoi il comprend notamment un conduit axial 74 établissant la communication avec ladite première chambre 28. Il ne s'agit cependant pas d'un manchon ouvert puisque son extrémité du côté opposé à ladite première chambre est fermée. Le double ergot 55 comporte en son milieu une partie formant guide coulissant le long du conduit axial 74 du distributeur 42, sans toutefois l'obturer. D'autre part, le conduit communiquant avec la première chambre n'est pas nécessairement axial.

Selon l'exemple, les éléments de conduits et trous aptes à commander et commuter la circulation de fluide se partagent entre le deuxième manchon 40 et le distributeur 42.

Plus particulièrement, selon cet exemple, ledit second manchon 40 comporte à sa base un trou radial 78 en communication, extérieurement, avec une entrée de fluide d'actionnement sous pression. Il comporte aussi quatre trous radiaux 79 décalés de 90° et débouchant dans ladite seconde chambre 29. Le second manchon 40 comporte en outre une gorge extérieure 80 dans une partie située dans l'épaisseur de la paroi d'extrémité 18. Cette gorge définit avec ladite paroi d'extrémité un conduit annulaire en communication, extérieurement, avec une sortie pour le fluide d'actionnement en vidange.

La gorge est percée de deux trous radiaux 82 diamétralement opposés.

Par ailleurs, le distributeur comporte deux rainures longitudinales 84 creusées sur sa face externe, diamétralement opposées et s'étendant depuis la hauteur du trou 78 jusqu'à celle des trous 79. Il comporte aussi deux trous radiaux 86 diamétralement opposés, situés à un niveau leur permettant de communiquer avec les trous 80, pour certaines positions angulaires prédéterminées du distributeur. Ce dernier comporte aussi deux trous radiaux 88 diamétralement opposés, situés à un niveau leur permettant de communiquer avec le trou 78. Les trous 86 et 88 sont dans un même plan mais décalés de 90° par rapport aux rainures 84.

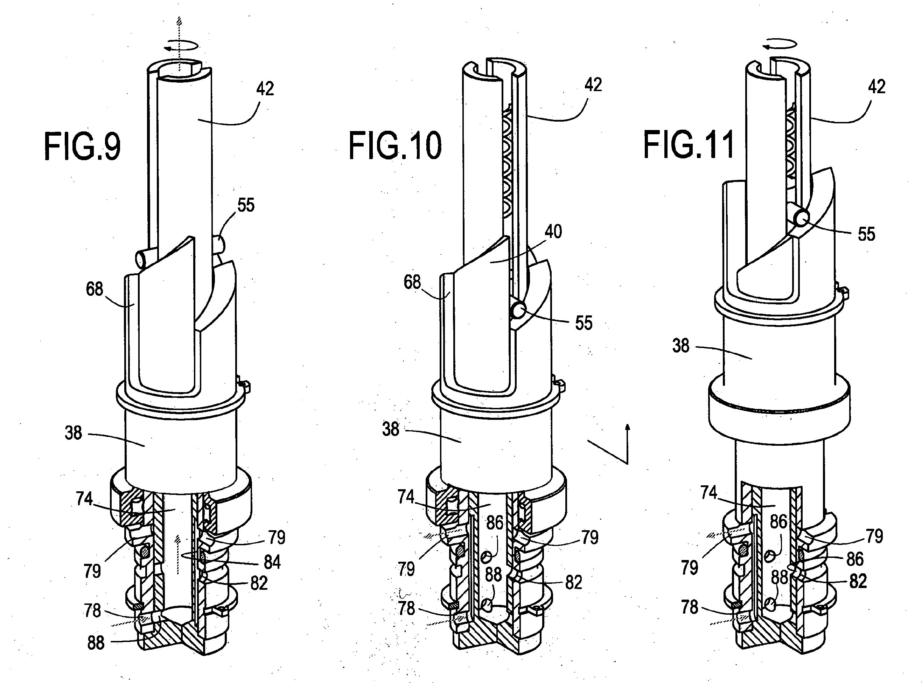

Ainsi, l'alimentation de la seconde chambre 29 en fluide sous pression se fait comme le montre la figure 10, par la mise en correspondance du trou 78 recevant le fluide sous pression avec une nervure longitudinale 84 du distributeur s'étendant jusqu'en regard d'un trou 79 débouchant dans la deuxième chambre.

Inversement, la vidange de la seconde chambre s'opère dans une autre position prédéterminée par mise en correspondance d'un trou 79 pratiqué dans le second manchon avec une rainure longitudinale 84 elle-même en correspondance avec un trou 82 pratiqué au fond de la gorge 80 reliée à l'évacuation de fluide d'actionnement (voir figure 9).

Pour ce qui concerne ladite première chambre, la mise sous pression de celle-ci se fait par mise en correspondance du trou 78 avec un trou 88 pratiqué dans le distributeur et qui débouche dans le conduit axial 74 de celui-ci. Ce conduit axial débouche dans la première chambre 28 (voir figure 9).

Dans une autre position du distributeur, décalée de 90°, le fluide de la première chambre reflue en passant par le conduit axial 74 jusqu'à un trou 86 mis en correspondance avec un autre trou 82 qui débouche au fond de la gorge 80 du deuxième manchon (voir figure 10).

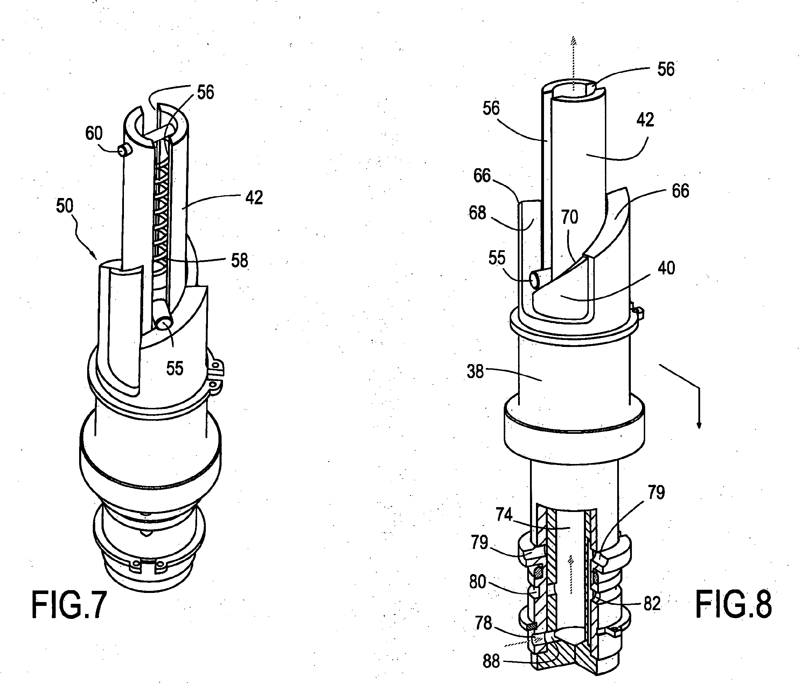

Le fonctionnement de l'inverseur va maintenant être expliqué en référence aux figures 8 à 11.

Sur la figure 8, le piston est supposé être en position haute en considérant la figure 1, c'est-à-dire que la première chambre 28 est à son volume minimum. Dans ces conditions, les deux rampes du premier manchon 38 surmontent les rampes du deuxième manchon 40, deux à deux. De plus, comme cela est visible, une rampe 70 du deuxième manchon 40 prolonge vers le bas la rampe 66 correspondante du premier manchon 38. L'ergot 55, sollicité par le ressort 58 est bloqué entre les extrémités inférieures des rampes 70 du deuxième manchon et les surfaces longitudinales 68 adjacentes du premier manchon. Le distributeur 42 est donc dans une position angulaire bien déterminée par rapport au deuxième manchon et dans cette position, les trous et éléments de conduits définis ci-dessus mettent la première chambre 28 en communication avec le fluide sous pression et permettent la vidange de la seconde chambre 29. Le piston commence alors à descendre, entraînant le premier manchon 38. Pendant tout ce mouvement du piston, la position angulaire du distributeur 42 ne change pas.

De plus, le déplacement du piston entraîne l'arbre en rotation par coopération des ergots 32 du piston avec les gorges 34 de l'arbre.

Lorsque le piston atteint sa position basse (figure 9), les rampes 66 du premier manchon arrivent dans le prolongement inférieur des rampes 70 du deuxième manchon. Par conséquent, sous la sollicitation du ressort 58, le distributeur tourne de 90° jusqu'à ce que l'ergot 55, en appui sur les rampes du premier manchon arrive au contact des butées longitudinales 72 du deuxième manchon. A la fin de cette rotation, (figure 10) le distributeur est dans une autre position prédéterminée par laquelle le fluide sous pression est appliqué à la seconde chambre 29 tandis que la première chambre 28 peut être vidangée. A partir de ce moment, le piston remonte en entraînant l'arbre 13 en rotation dans le même sens. A la fin de la course de remontée du piston, ledit premier manchon surmonte à nouveau le deuxième manchon comme dans la configuration illustrée sur la figure 8 et le distributeur peut à nouveau tourner d'un quart de tour (figure 11) pour inverser la distribution de fluide sous pression.

## Revendications

1. Moteur hydraulique du type comprenant un carter (12) traversé par un arbre rotatif (13) couplé par des moyens de conversion de mouvement à un piston (24) à déplacement rectiligne alternatif, mobile à l'intérieur dudit carter et monté coulissant le long dudit arbre, ledit piston définissant dans ledit carter des première (28) et seconde (29) chambres alternativement alimentées en fluide sous pression, et un inverseur (30) installé à l'intérieur dudit carter, **caractérisé en ce que** l'inverseur comporte trois éléments coaxiaux d'axe parallèle à celui dudit arbre rotatif, montés coulissants et/ou tournants de façon étanche les uns par rapport aux autres :
- un premier manchon (38) solidaire du piston et s'étendant dans ladite première chambre (28),
- un deuxième manchon (40), fixe, solidaire, d'une paroi d'extrémité (18) du carter et s'étendant au travers de ladite seconde chambre (24) et dudit premier manchon (38), jusqu'à ladite première chambre,
- un distributeur (42) s'étendant entre les deux chambres et monté rotatif à l'intérieur dudit deuxième manchon,
et **en ce que** ledit inverseur comporte en outre :
- des éléments de conduits et trous (78, 79, 80, 82, 84, 86, 88) aptes à commander et commuter la circulation du fluide d'actionnement, agencés entre le deuxième manchon (40) et le distributeur (42) pour commander alternativement et séquentiellement le remplissage d'une chambre et la vidange de l'autre suivant que ledit distributeur occupe telle ou telle position prédéterminée parmi plusieurs, définies par la coopération desdits éléments coaxiaux, et
- des moyens de commande de rotation dudit distributeur (42) en fonction du déplacement dudit premier manchon solidaire du piston.

2. Moteur hydraulique selon la revendication 1, **caractérisé en ce que** lesdits moyens de commande comportent des rampes (66, 70) et butées longitudinales (68, 72), agencées aux extrémités libres desdits premier et deuxième manchons et **en ce qu'**un ergot latéral (55), monté mobile dans une lumière longitudinale dudit distributeur coopère avec lesdites rampes et butées en étant élastiquement sollicité vers elles.

3. Moteur hydraulique selon la revendication 2, **caractérisé en ce qu'**un ressort (58) est monté dans ledit distributeur entre une butée de celui-ci et ledit ergot latéral (55) pour repousser ledit ergot vers lesdites rampes et butées longitudinales.

4. Moteur hydraulique selon la revendication 2 ou 3, **caractérisé en ce que** ledit ergot (55) s'étend diamétralement en saillie de part et d'autre du distributeur et **en ce que** lesdits premier et deuxième manchons comportent chacun deux rampes (66, 70) et butées longitudinales (68, 72) précitées.

5. Moteur hydraulique selon la revendication 4, **caractérisé en ce que** ledit premier manchon (38) comporte à son extrémité libre deux rampes (66) opposées et symétriques définissant entre elles des butées longitudinales (68) précitées.

6. Moteur hydraulique selon la revendication 4 ou 5, **caractérisé en ce que** ledit deuxième manchon (40) comporte à son extrémité libre, deux rampes (70) opposées et symétriques définissant entre elles des butées longitudinales (72) précitées.

7. Moteur hydraulique selon l'une des revendications précédentes, **caractérisé en ce que** ledit piston comporte au moins un ergot (32) faisant saillie radialement vers l'intérieur et engagé dans une gorge circonférentielle ondulée (34), creusée à la surface extérieure dudit arbre.

## Patentansprüche

1. Hydraulikmotor des Typs, der ein Gehäuse (12) umfasst, das von einer Drehwelle (13) durchquert wird, die über Bewegungswandlungsmittel mit einem linearen Wechselverdrängerkolben (24) gekoppelt ist, der sich in dem Gehäuse bewegen kann und entlang der Welle gleitend montiert ist, wobei der Kolben in dem Gehäuse eine erste (28) und eine zweite (29) Kammer definiert, die abwechselnd mit Druckfluid gespeist werden, und ein Inverter (30) in dem Gehäuse installiert ist, **dadurch gekennzeichnet, dass** der Inverter Folgendes umfasst:
- drei koaxiale Elemente mit einer Achse parallel zu der der Drehwelle, so montiert, dass sie relativ zueinander abgedichtet gleiten und/oder rotieren;
- eine erste Manschette (38), die fest mit dem Kolben verbunden ist und in die erste Kammer (28) verläuft;
- eine zweite befestigte Manschette (40), die mit einer Endwand (18) des Gehäuses fest verbunden ist und durch die zweite Kammer (24) und die erste Manschette (38) bis zu der ersten Kammer verläuft;
- einen Verteiler (42), der zwischen den beiden Kammern verläuft und drehbar im Innern der zweiten Manschette montiert ist,
und dadurch, dass der Inverter ferner Folgendes umfasst:
- Leitungs- und Lochelemente (78, 79, 80, 82, 84, 86, 88) zum Steuern und Umschalten des Umlaufs des Betätigungsfluids, angeordnet zwischen der zweiten Manschette (40) und dem Verteiler (42), um das Füllen der einen Kammer und das Leeren der anderen Kammer abwechselnd und sequentiell je nachdem zu steuern, ob der Verteiler die eine oder die andere vorbestimmte Position aus mehreren Positionen einnimmt, die durch die Zusammenwirkung der koaxialen Elemente definiert werden; und
- Mittel zum Steuern der Rotation des Verteilers (42) in Abhängigkeit von der Verschiebung der ersten fest verbundenen Manschette des Kolbens.

2. Hydraulikmotor nach Anspruch 1, **dadurch gekennzeichnet, dass** die Steuermittel Rampen (66, 70) und Längsanschläge (68, 72) aufweisen, die an den freien Enden der ersten und zweiten Manschette angeordnet sind, und dadurch, dass eine beweglich in einem Längsschlitz des Verteilers montierte seitliche Nase (55) mit den Rampen und Anschlägen zusammenwirkt, indem sie elastisch in Richtung auf diese vorgespannt ist.

3. Hydraulikmotor nach Anspruch 2, **dadurch gekennzeichnet, dass** eine Feder (58) in dem Verteiler zwischen einem Anschlag davon und der seitlichen Nase (55) montiert ist, um die Nase in Richtung auf die Rampen und Längsanschläge zu schieben.

4. Hydraulikmotor nach Anspruch 2 oder 3, **dadurch gekennzeichnet, dass** die Nase (55) diametral verläuft und auf beiden Seiten des Verteilers vorragt, und dadurch, dass die erste und zweite Manschette jeweils zwei genannte Rampen (66) und Längsanschläge (68, 72) umfassen.

5. Hydraulikmotor nach Anspruch 4, **dadurch gekennzeichnet, dass** die erste Manschette (38) an ihrem freien Ende zwei gegenüberliegende und symmetrische Rampen (66) aufweist, die zwischen sich die genannten Längsanschläge (68) definieren.

6. Hydraulikmotor nach Anspruch 4 oder 5, **dadurch gekennzeichnet, dass** die zweite Manschette (40) an ihrem freien Ende zwei gegenüberliegende und symmetrische Rampen (70) umfasst, die zwischen sich die genannten Längsanschläge (72) definieren.

7. Hydraulikmotor nach einem der vorherigen Ansprüche, **dadurch gekennzeichnet, dass** der Kolben wenigstens eine Nase (32) umfasst, die radial einwärts vorragt und in eine gewellte Umfangsnut (34) eingreift, die aus der Außenfläche der Welle ausgearbeitet ist.

## Claims

1. A hydraulic motor of the type comprising a casing (12), through which a rotary shaft (13) passes that is coupled via movement conversion means to an alternating rectilinear displacement piston (24) that can move inside said casing and is mounted in order to slide along said shaft, said piston defining, inside said casing, first (28) and second (29) chambers that are alternately fed with pressurised fluid, and an inverter (30) installed inside said casing, **characterised in that** said inverter comprises:
- three coaxial elements with an axis parallel to that of said rotary shaft, mounted in order to slide and/or rotate in a sealed condition relative to each other;
- a first sleeve (38) rigidly connected to said piston and extending into said first chamber (28);
- a second fixed sleeve (40) rigidly connected to an end wall (18) of said casing and extending through said second chamber (24) and said first sleeve (38) up to said first chamber;
- a distributor (42) extending between said two chambers and rotationally mounted inside said second sleeve,
and **in that** said inverter further comprises:
- conduit and hole elements (78, 79, 80, 82, 84, 86, 88) designed to control and to switch the circulation of said actuating fluid and arranged between said second sleeve (40) and said distributor (42) in order to alternately and sequentially control the filling of one chamber and the emptying of the other chamber depending on whether said distributor is in a particular predetermined position from among a plurality of positions that are defined by the cooperation of said coaxial elements; and
- means for controlling the rotation of said distributor (42) as a function of the displacement of said first rigidly connected sleeve of said piston.

2. The hydraulic motor according to claim 1, **characterised in that** said control means comprise ramps (66, 70) and longitudinal stops (68, 72) that are arranged at the free ends of said first and second sleeves, and **in that** a lateral lug (55) mounted in a mobile manner in a longitudinal aperture of said distributor cooperates with said ramps and stops by being elastically biased towards them.

3. The hydraulic motor according to claim 2, **characterised in that** a spring (58) is mounted inside said distributor between a stop thereof and said lateral lug (55) so as to push said lug towards said ramps and longitudinal stops.

4. The hydraulic motor according to claim 2 or 3, **characterised in that** said lug (55) extends diametrically and protrudes on either side of said distributor, and **in that** said first and second sleeves each comprise said two ramps (66, 70) and longitudinal stops (68, 72).

5. The hydraulic motor according to claim 4, **characterised in that** said first sleeve (38) comprises, at its free end, two opposed and symmetrical ramps (66) that define said longitudinal stops (68) between them.

6. The hydraulic motor according to claim 4 or 5, **characterised in that** said second sleeve (40) comprises, at its free end, two opposed and symmetrical ramps (70) that define said longitudinal stops (72) between them.

7. The hydraulic motor according to any one of the preceding claims, **characterised in that** said piston comprises at least one lug (32) that radially protrudes inwards and engages in a corrugated circumferential groove (34) that is hollowed out of the external surface of said shaft.
